# EUROPÄISCHE PATENTSCHRIFT

(11) **EP 1 682 401 B1**
(45) Veröffentlichungstag und Bekanntmachung des Hinweises auf die Patenterteilung: **23.12.2009**
(21) Anmeldenummer: 04790213.5
(22) Anmeldetag: 08.10.2004
(51) Int. Cl.: B62D 21/17, B62D 25/14, B60H 1/00

(54) **BAUTEIL, VERWENDUNG EINES BAUTEILS SOWIE VERFAHREN ZUR HERSTELLUNG EINES BAUTEILS, INSBESONDERE EINES QUERTRÄGERS FÜR EIN FAHRZEUG**
STRUCTURAL ELEMENT, USE OF A STRUCTURAL ELEMENT AND METHOD FOR PRODUCING A STRUCTURAL ELEMENT, PARTICULARLY A CROSS MEMBER FOR A VEHICLE
ELEMENT CONSTITUTIF, UTILISATION D'UN ELEMENT CONSTITUTIF ET PROCEDE POUR PRODUIRE UN ELEMENT CONSTITUTIF, NOTAMMENT UN LONGERON DE VEHICULE

(30) Priorität: 08.10.2003 DE 10347230
(43) Veröffentlichungstag der Anmeldung: 26.07.2006
(73) Patentinhaber: Behr GmbH & Co. KG, 70469 Stuttgart (DE)
(72) Erfinder: WOLF, Walter, 71570 Oppenweiler-Zell (DE)
(86) Internationale Anmeldenummer: PCT/EP2004/011276
(87) Internationale Veröffentlichungsnummer: WO 2005/032917

(56) Entgegenhaltungen:
- DE-A1- 10 003 575
- DE-A1- 19 832 738
- DE-A1- 19 935 654
- DE-C1- 19 816 330
- DE-U- 1 909 519

## Beschreibung

Die Erfindung bezieht sich auf ein Bauteil, insbesondere auf einen Querträger zum Anordnen zwischen A-Säulen eines Kraftfahrzeuges sowie auf die Verwendung eines derartigen Bauteils. Des Weiteren betrifft die Erfindung ein Verfahren zur Herstellung eines derartigen Bauteils.

Aus dem Kraftfahrzeugbau sind aus Rohren bestehende Querträger bekannt, die aus Metall bestehen und entsprechend große Wandstärken aufweisen. Die Wandstärken sind dabei für eine ausreichende Form-, Biege-, Knick- und Torsionssteifigkeit und somit für eine ausreichende Druckbelastbarkeit entsprechend dick ausgeführt. Der als Rohr oder Hohlprofil ausgebildete Querträger eignet sich prinzipiell zur Luftführung beispielsweise von einer mittig im Frontbereich des Fahrzeugs angeordneten Klimaanlage zu seitlichen Ausströmem hin.

Ein derartiger Querträger ist beispielsweise aus der DE 100 64 522 A1 bekannt. Dabei ist der Querträger zur Gewichtsreduzierung aus einem Leichtbauwerkstoff, insbesondere aus einem Leichtmetall in Art eines Schalenbauteils oder Grundkörpers gebildet, in welchen für eine hinreichende Steifigkeit und Druckbelastbarkeit des Querträgers ein zumindest einen Kanal bildender Kunststoffkern angeordnet ist. Zum Austritt des Luftstroms ist der Kanal mit Öffnungen versehen.

Der Erfindung liegt die Aufgabe zugrunde, den aus dem Stand der Technik bekannten Querträger zu verbessern, insbesondere hinsichtlich einer weiteren Gewichtsreduzierung zu verbessern.

Die Aufgabe wird erfindungsgemäß gelöst durch ein Bauteil mit den Merkmalen des Anspruchs 1 und Verwendungen eines Bauteils mit den Merkmalen der Ansprüche 14 und 15 sowie durch ein Verfahren zur Herstellung eines Bauteils mit den Merkmalen des Anspruchs 16.

Vorteilhafte Weiterbildungen der Erfindung sind Gegenstand der Unteransprüche.

Für eine möglichst große Gewichtseinsparung im Fahrzeugbau ist ein Bauteil, ausgebildet als Querträger zum Anordnen zwischen A-Säulen eines Kraftfahrzeugs, vorgesehen, der einen im wesentlichen als Hohlprofil ausgebildeten Grundkörper aufweist, der innen mit einem zumindest einen Kanal bildenden Kunststoffkern versehen ist, wobei der Grundkörper zumindest teilweise perforiert ausgebildet ist. Ferner sind der Grundkörper und der Kunststoffkern zumindest in einem Öffnungsbereich, insbesondere im Bereich eines Strömungsaustritts perforiert ausgebildet. Ein derartiger mit einem perforiert ausgebildete Öffnungsbereich versehener Grundkörper weist zusätzlich neben der Gewichtseinsparung eine gute Verstärkungsfunktion der Struktur des Bauteils auf.

Vorzugsweise ist der Grundkörper aus Blech, insbesondere aus einem Leichtmetall- oder Stahl-Blech, z.B. Aluminiumblech oder Stahlfeinblech, gebildet. Die Perforierung des Grundkörpers kann beispielsweise aus einem Lochblech und/oder einem Drahtgewebe und/oder einem Streckmetall gebildet sein. In einer besonders einfachen Ausführungsform ist der Grundkörper aus einem Lochblech gebildet. Dabei ist die Wandstärke des metallischen Grundkörpers möglichst dünn, so dass Gewicht eingespart werden kann. Für eine hohe Verformungsenergieaufnahme und hohe Form-, Biege- und Torsionssteifigkeit bei gleichzeitig besonders leichtem Aufbau des Bauteils ist der Grundkörper mit dem Kunststoffkern versehen, wobei die Festigkeit durch den Verbund aus Grundkörper und Kunststoffkern erreicht wird. Darüber hinaus bewirkt der Kunststoffkern eine hinreichend gute Isolierung, insbesondere Schallisolierung und thermische Isolierung z.B. bei Verwendung des Bauteils als Luftführungskanal. Bevorzugt ist der Kunststoffkern aus einem Schaummaterial, beispielsweise aus einem aufgeschäumten Thermoplast, Polyurethanschaum oder einem Partikelschaum. Für einen eine höhere Festigkeit aufweisenden Kunststoffkern ist dieser bevorzugt aus über ein Bindemittel miteinander verbundenen Schaumpartikeln gebildet.

Für eine möglichst einfache Herstellung des als ein Hybridbauteil ausgebildeten Bauteils ist der Grundkörper vorzugsweise aus zwei Halbkörpern, insbesondere aus zwei Halbschalen gebildet. Zweckmäßigerweise ist der Grundkörper, insbesondere dessen zwei Halbkörper über den Kunststoffkern zusammengehalten. Zusätzlich können die beiden Halbkörper zusätzlich mechanisch verbunden sein.

Je nach Art und Funktion sowie Anordnung des Bauteils weist der Grundkörper vorzugsweise je Halbkörper mindestens einen perforierten Öffnungsbereich auf. Alternativ oder zusätzlich ist der Grundkörper in einem beide Halbkörper übergreifenden Öffnungsbereich perforiert. Mit anderen Worten: Ein aus zwei Halbschalen gebildeter Grundkörper weist einen schalenübergreifenden Öffnungsbereich, d.h. einen die Ober- und die Unterschale überdeckenden Bereich, auf. Je nach Funktion kann der perforierte Öffnungsbereich den Grundkörper vollständig umlaufen. Vorzugsweise ist bei einer die Halbkörper übergreifenden Perforierung im Öffnungsbereich dieser mit einem Verstärkungselement, beispielsweise aus Kunststoff oder Metall, versehen. Zweckmäßigerweise ist das Verstärkungselement parallel zur Trennebene der Halbkörper angeordnet.

Für eine Gestaltungsfreiheit hinsichtlich der Funktion des Bauteils kann der Grundkörper vorzugsweise mit mehreren in Längsrichtung gesehen in Abstand zueinander angeordneten Öffnungsbereichen versehen sein. Dabei kann der Kanal vorteilhafterweise als Mehrkammerkanal ausgebildet sein. Insbesondere durch ein nachträgliches Einbringen des Kunststoffkerns oder der Kunststoffstruktur ist eine fertigungstechnische und gestalterische Freiheit gegeben, die ein Bauteil mit vielfältigen Funktionen ermöglichen. Durch einen Mehrkammerkanal ist beispielsweise ein Luftführungskanal zum Führen von Frischluft, Heißluft oder Kaltluft in separaten Kanälen des Mehrkammerkanals möglich. Zusätzlich kann eine der Kammern als Kanal zum Führen von Leitungen oder Kabeln verwendet werden.

Zusätzlich zur Integration von einem oder mehreren Kanälen in das Bauteil sind vorzugsweise an den aneinander liegenden Rändern der Halbkörper und/oder an dem Grundkörper Halterungen, Anbindungspunkte oder Gehäuseteile einer Heizungs- und/ oder Klimaanlage angeformt. Bevorzugt wird ein derartig ausgebildetes Bauteil als Instrumententafelträger in einem Kraftfahrzeug verwendet, wobei der Kanal ein Luftführungskanal und/oder ein Kabelkanal ist. Alternativ kann ein derart ausgebildetes Bauteil als unter einer Windschutzscheibe angeordneter Querträger in einem Kraftfahrzeug verwendet werden, wobei der Kanal ein Luftführungskanal zur Führung eines der Windschutzscheibe und/oder den Seitenscheiben zu zuführenden Luftstroms und/oder zur Beheizung einer Wischblattablage. Auch könnte das Bauteil als ein so genanntes Rear-End oder Heckabschlussmodul verwendet werden.

Bei dem bevorzugten Verfahren zur Herstellung eines derartigen Bauteils wird der Grundkörper zumindest teilweise perforiert und in eine Grundform umgeformt sowie in ein Werkzeug eingelegt, in weichem der Kunststoffkern in einem einzigen Verfahrensschritt an den Grundkörper angeformt, z.B. angespritzt wird. Mit anderen Worten: Der Kunststoffkern wird nachträglich mit dem metallischen Grundkörper verbunden oder in den metallischen Grundkörper gefügt, eingespritzt, geschäumt oder eingebracht und wird in einem Öffnungsbereich zumindest teilweise perforiert ausgebildet. Dabei wird ein Kunststoff, insbesondere ein thermisch aktivierbarer Schaum, wie Polyurethanschaum, in den Grundkörper eingespritzt, wo der Schaum aufquillt und an dem Grundkörper haftet. Je nach Vorgabe kann der Kunststoffkern unterschiedliche Schaumdicken aufweisen, so dass der Strömungsverlauf des Mediums in dem durch den Kunststoffkern gebildeten Kanal von der Statikstruktur des Bauteils unabhängig ist. D.h. die Statik- oder Versteifungsstruktur des Kunststaffkerns wird in Abhängigkeit von der mechanischen Beanspruchung des Bauteils durch eine entsprechende Schaumdicke eingestellt, so dass ein bereichsweise belastungsvariables Bauteil ermöglicht ist.

Die mit der Erfindung erzielten Vorteile bestehen insbesondere darin, dass ein Bauteil, welches als Querträger, Frontend-Bauteil oder Strukturbauteil verwendet werden kann, besonders leicht bei gleichzeitig möglichst guter Form-Biege-, Knick-, Beul- und Torsionssteifigkeit ausgebildet ist. Der einen Kanal bildenden Kunststoffkern dient insbesondere je nach Aufbau der Integration von einem oder mehreren medienführenden Kanälen oder eines Kabelkanals. Der Kunststoffkern oder die Kunststoffstruktur kann nachträglich in den Grundkörper eingebracht werden. Durch den Kunststoffkern und dessen fügende Verbindung mit dem metallischen Grundkörper kann eine zusätzliche Verbindung entfallen.

Ausführungsbeispiele der Erfindung werden anhand einer Zeichnung näher erläutert. Darin zeigen:
- Figur 1: schematisch eine perspektivische Ansicht eines Bauteils, insbe- sondere eines Querträgers, mit einem zumindest teilweise perfo- rierten Grundkörper,
- Figur 2: schematisch eine perspektivische Ansicht eines alternativen Bauteils,
- Figur 3: schematisch eine perspektivische Ansicht eines alternativen Bauteils mit einem im Öffnungsbereich des Grundkörpers ange- ordneten Verstärkungselement,
- Figur 5: schematisch einen Querschnitt eines Bauteils,
- Figur 6: schematisch einen Querschnitt eines Bauteils im Bereich einer Perforierung,
- Figur 7: schematisch einen Querschnitt eines Bauteils gemäß Figur 6 mit einer im Bereich der Perforierung angeordneten Halterung, und
- Figuren 8 bis 9: sowie 10A bis 10C schematisch verschiedene Ausführungs- formen für eine Perforierung.

Einander entsprechende Teile sind in allen Figuren mit den gleichen Bezugszeichen versehen.

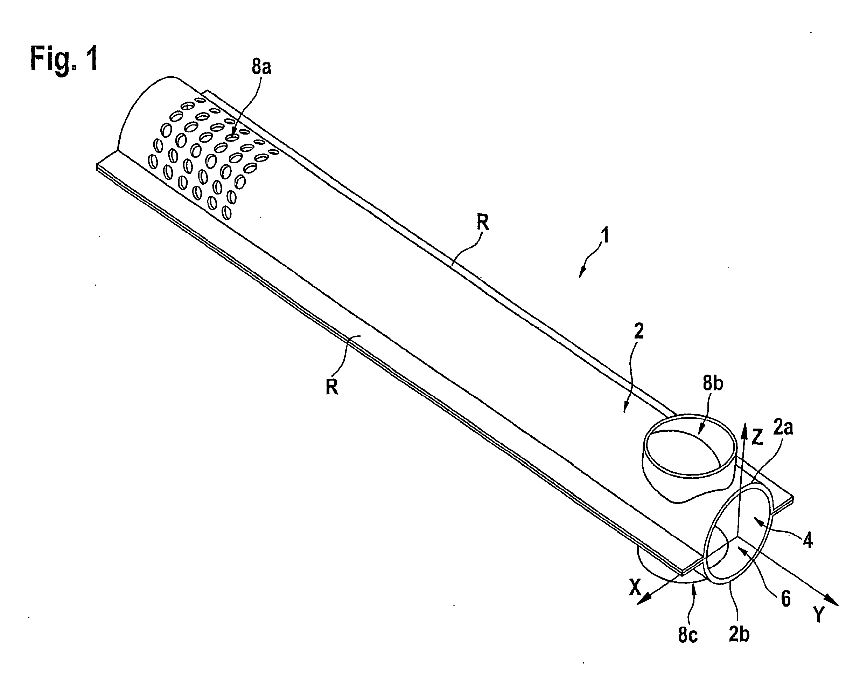

Figur 1 zeigt ein Bauteil 1, z.B. einen Querträger zum Anordnen zwischen nicht näher dargesteilten A-Säulen eines nicht näher dargestellten Fahrzeugs. Das Bauteil 1 dient beispielsweise als Instrumententafelträger für eine Klima- und/oder Heizungsanlage. Alternativ kann das Bauteil 1 als ein unter einer Windschutzscheibe angeordneter Querträger in einem Fahrzeug dienen, welcher als Luftführungskanal zur Klimatisierung des Fahrzeuginnenraums und zur Enteisung der Windschutz- oder Frontscheibe vorgesehen ist.

Das Bauteil 1 weist hierzu einen Grundkörper 2 auf, der bevorzugt aus Blech, insbesondere aus einem Leichtmetall-Blech, z.B. aus AluminiumBlech oder Feinstahl-Blech gebildet ist. Der Grundkörper 2 ist im Ausführungsbeispiel als Hohlprofil, insbesondere rohrartig ausgeführt. Alternativ kann der Grundkörper 2 auch als ein Hohlprofil mit einem vieleckigen Querschnitt ausgeführt sein (nicht näher dargestellt). Des Weiteren ist der Grundkörper 2 aus zwei Halbkörpern 2a und 2b, z.B. zwei Halbschalen, gebildet - einer Unterschale und einer Oberschale.

Der Grundkörper 2 ist innenseitig mit einem Kunststoffkern 4 versehen, der einen Kanal 6 bildet. Über den Kunststoffkern 4 ist der Grundkörper 2, insbesondere dessen zwei Halbkörper 2a und 2b zusammengehalten, insbesondere wird der Kunststoffkern 4 an den Grundkörper 2 gefügt. Hierzu wird der Kunststoff in den Grundkörper 2 beispielsweise in einem Spritzgussverfahren eingebracht. Alternativ und abhängig von der Art des Kunststoffs kann dieser auch eingeschäumt, eingegossen oder in ähnlicher Weise eingebracht sein.

Zusätzlich kann der Grundkörper 2 mechanisch verbunden sein. Beispielsweise kann der Grundkörper 2 an den aneinander liegenden Rändern R der Halbkörper 2a, 2b genietet, geschraubt oder in ähnlicher Weise verbunden sein.

Der mittels des Kunststoffkerns 4 gebildete Kanal 6 dient beispielsweise der Führung eines Mediums, insbesondere Luft zur Klimatisierung des Fahrzeuginnenraums. Alternativ kann der Kanal 6 auch der Führung von Leitungen oder Kabeln dienen. Der Grundkörper 2 ist mit mehreren in Längsrichtung gesehen in Abstand zueinander angeordneten Öffnungsbereichen 8a bis 8c zum Ein- und/oder Austritt eines im Kanal 6 geführten Mediums, z.B. Luft, versehen.

Der Kunststoffkern 4 dient unter anderem der Steifigkeit des Grundkörpers 2. Der besonders dünnwandig ausgebildete Grundkörper 2 führt bei Durchströmen mit Luft zu einer Geräuschentwicklung, weiche besonders vorteilhaft durch Auskleidung des Grundkörpers 2 mit dem Kunststoffkern 4 gedämpft wird. D.h. der Kunststoffkern 4 übernimmt u.a. eine Schallisolierung und ggf. auch eine thermische Isolierung.

Für eine besonders leichte Ausführung des Bauteils 1 ist dessen Grundkörper 2 zumindest teilweise perforiert ausgebildet. Der Grundkörper 2 ist in einem der Öffnungsbereiche 8a perforiert ausgebildet. Alternativ kann der Grundkörper 2 in mehreren oder allen Öffnungsbereichen 8a bis 8c perforiert ausgebildet sein. Unter Perforierung wird hierbei eine Mehrzahl von zueinander beabstandeten Löchern, welche in Reihen und/oder Spalten mit einem Lochmuster angeordnet verstanden. Der Grundkörper 2 ist in der einfachsten Ausführungsform aus einem Lochblech gebildet. Der perforierte Öffnungsbereich 8a ist bei einem als Luftführung dienenden Kanal 6 ein Strömungsaustritt für die in den Fahrzeuginnenraum zu führende Luft.

Wie in der Figur 1 dargestellt, ist der Grundkörper 2 im Öffnungsbereich 8a des oberen Haibkörpers 2a perforiert ausgebildet. Je nach Art und Ausbildung des Grundkörpers 2 kann dieser je Halbkörper 2a, 2b einen perforierten Öffnungsbereich 8a aufweisen.

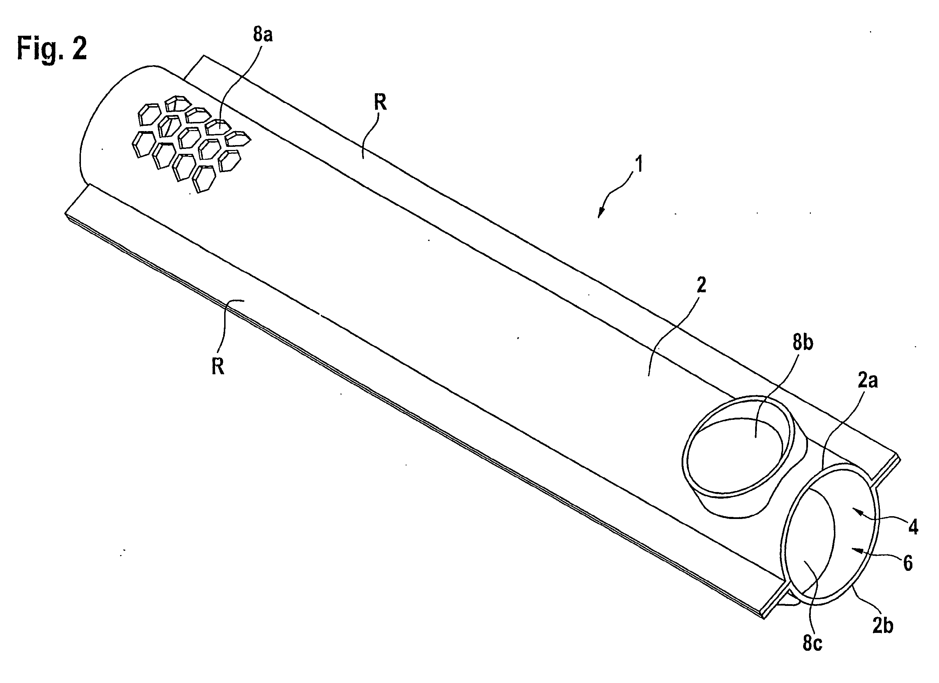

In Figur 2 ist eine alternative Ausführungsform für ein Bauteil 1 dargestellt. Anstelle eines runde Löcher aufweisenden Lochmusters im perforierten Öffnungsbereich 8a weist dieser ein Vielecke aufweisendes Lochmuster (= hexagonales Lochmuster) auf. Das hexagonale Lochmuster führt gegenüber dem Lochmuster im Öffnungsbereich 8a nach Figur 1 zu einer geringeren Materialanhäufung zwischen den Löchern und somit zu einer weiteren Gewichtsreduzierung.

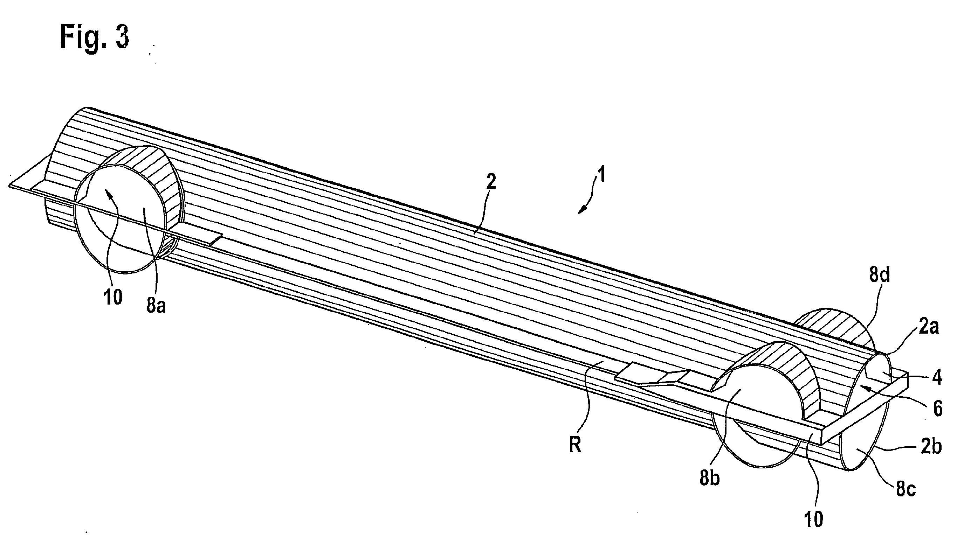

Figur 3 zeigt eine alternative Ausführungsform für das Bauteil 1, wobei die Öffnungsbereiche 8a bis 8d die Halbkörper 2a, 2b übergreifend angeordnet sind. Je nach Art und Ausführung können auch die beide Halbkörper 2a, 2b überdeckenden Öffnungsbereiche 8a bis 8d perforiert ausgebildet sein (nicht näher dargestellt). Für eine hinreichend gute Steifigkeit auch dieser Öffnungsbereiche 8a bis 8d sind diese mit einem Verstärkungselement 10 versehen. Das Verstärkungselement 10 ist vorzugsweise parallel zur Trennebene der Halbkörper 2a, 2b angeordnet und aus Kunststoff gebildet. Das Verstärkungselement 10 wird im Fügeverfahren des Grundkörpers 2 mit dem Kunststoffkern 4 in einem Fertigungsschritt wie oben beschrieben z.B. durch Ausspritzen eingefügt.

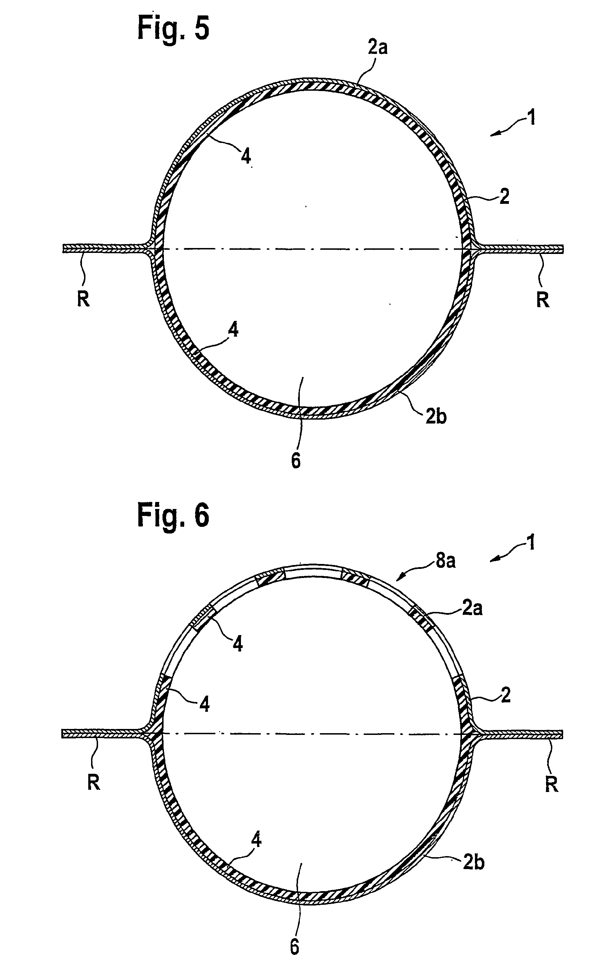

Die Figur 5 zeigt schematisch einen Querschnitt durch ein Bauteil 1 mit einem Grundkörper 2 aus einem oberen und unteren Halbkörper 2a, 2b, die innen mit einem Kunststoffkern 4 ausgekleidet sind. Im zusammengefügten Zustand des Bauteils 1 ist ein Kanal 6 im Innenraum des Kunststoffkems 4 gebildet. Der Kanal 6 kann dabei in nicht näher dargestellter Art und Weise als ein Mehrkammerkanal ausgebildet sein. Dazu ist der Kanal 6 durch Wände in mehrere Kammern unterteilt, wobei z.B. der eine zum Führen von Frischluft, ein anderer Kammerkanal zum Führen von Warmluft dient. Figur 6 zeigt schematisch einen Querschnitt das Bauteil 1 im Bereich eines perforierten Öffnungsbereiches 8a.

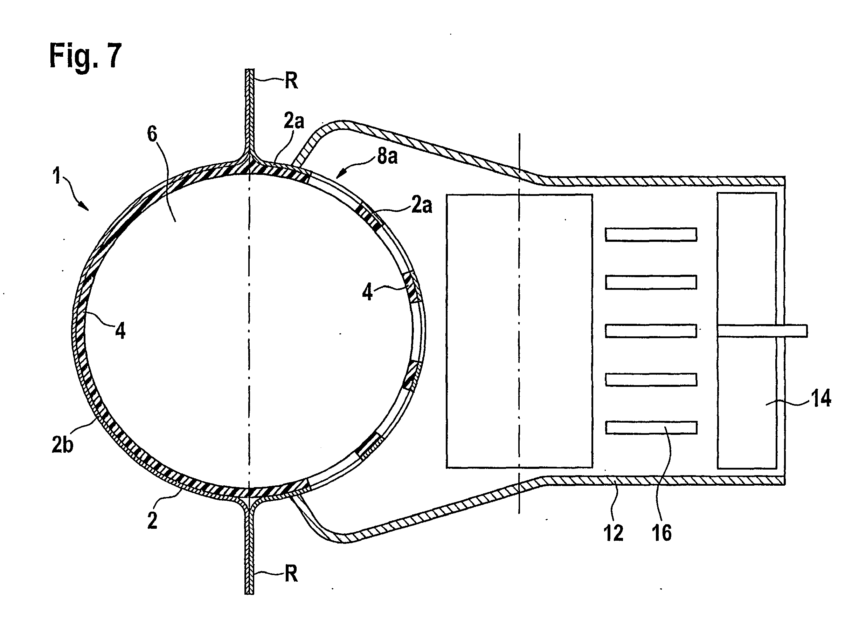

Figur 7 zeigt ebenfalls das Bauteil 1 im Bereich des perforierten Öffnungsbereiches 8a im Querschnitt. Dabei ist am Grundkörper 2 im Öffnungsbereich 8a ein Gehäuseteil 12, welcher beispielsweise als Strömungsaustritt dient und mit entsprechenden Austrittsöffnungen 14 und/oder Umlenkmittel 16 versehen ist, angeordnet. Alternativ oder zusätzlich können an den Grundkörper 2 in nicht näher dargestellter Art und Weise weitere Halterungen, Anbindungspunkte oder Gehäuseteile 12 einer Heizungs- und/ oder Klimaanlage angeformt sein.

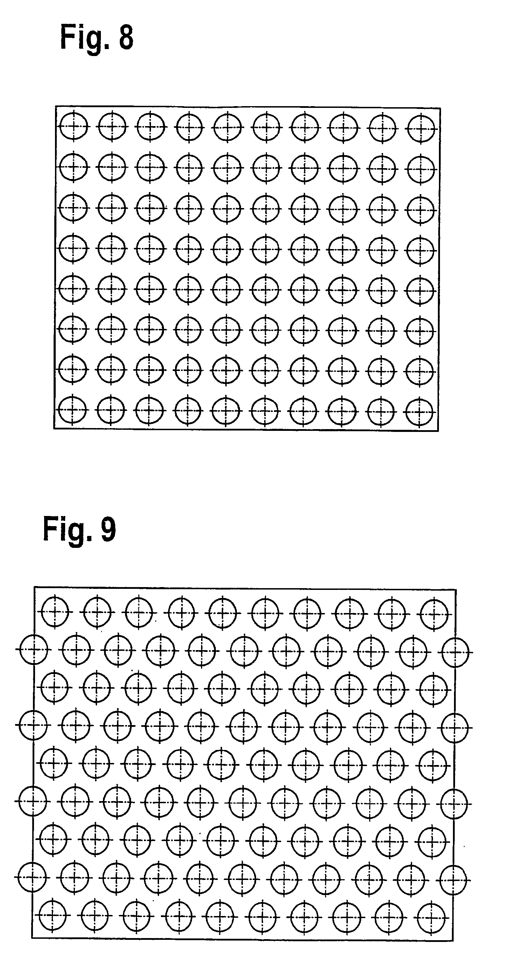

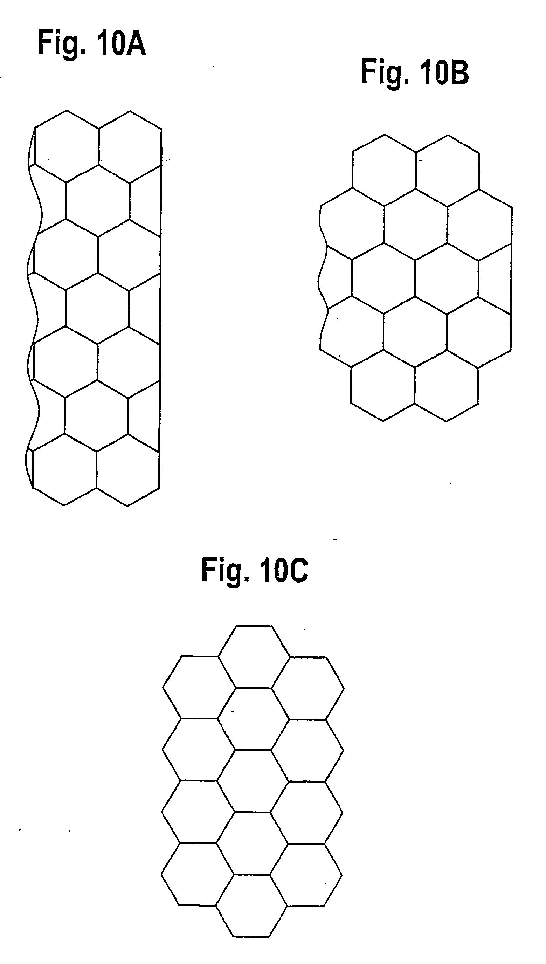

Die Figuren 8 und 9 sowie 10A bis 10C zeigen verschiedene Ausführungsformen für das Lochmuster eines perforierten Öffnungsbereiches 8a bis 8f. In Figur 8 ist beispielsweise ein Lochmuster mit parallel zueinander angeordneten und eine quadratische Lochanordnung bildenden Löchern und in Figur 9 ein Lochmuster mit zueinander versetzt angeordneten und eine versetzte Lochanordnung bildenden Löchern dargestellt. Die Figuren 10A bis 10C zeigen verschiedene Lochmuster für hexagonale Löcher in unterschiedlicher Anordnung. Der Vielfalt der Lochmuster und der Anordnung sowie der Form der Löcher sind keine Grenzen gesetzt. Die Art, Anordnung und die Form richten sich nach der Funktion des zugehörigen Öffnungsbereiches 8a bis 8f.

### Bezugszeichenliste

- 1: Bauteil
- 2: Grundkörper
- 2a, 2b: Halbkörper
- 4: Kunststoffkern
- 6: Kanal
- 8a bis 8f: Öffnungsbereiche
- 10: Verstärkungselement
- 12: Gehäuseteil

- R: Rand

## Patentansprüche

1. Bauteil (1), ausgebildet als Querträger zum Anordnen zwischen A-Säulen eines Kraftfahrzeugs, wobei der Querträger als Luftführungskanal vorgesehen ist, mit einem im wesentlichen als Hohlprofil ausgebildeten Grundkörper (2), der innen mit einem zumindest einen Kanal (6) bildenden Kunststoffkern (4) versehen ist, **dadurch gekennzeichnet, dass** der Grundkörper (2) und der Kunststoffkern (4) im Bereich zumindest eines Öffnungsbereichs (8a) perforiert ausgebildet sind.

2. Bauteil nach Anspruch 1, wobei der Grundkörper (2) aus Blech, insbesondere aus einem Stahl- oder Leichtmetall-Blech gebildet ist.

3. Bauteil nach einem der Ansprüche 1 bis 2, wobei die Perforierung des Grundkörpers (2) aus einem Lochblech und/oder einem Drahtgewebe und/oder einem Streckmetall gebildet ist.

4. Bauteil nach einem der Ansprüche 1 bis 3, wobei der Grundkörper (2) aus zwei Halbkörpern (2a, 2b), insbesondere aus zwei Halbschalen gebildet ist.

5. Bauteil nach einem der Ansprüche 1 bis 4, wobei der Grundkörper (2), insbesondere dessen zwei Halbkörper (2a, 2b) über den Kunststoffkern (4) zusammengehalten ist.

6. Bauteil nach Anspruch 4 oder 5, wobei die beiden Halbkörper (2a, 2b) zusätzlich mechanisch verbunden sind.

7. Bauteil nach einem der Ansprüche 4 bis 6, wobei der Grundkörper (2) je Halbkörper (2a, 2b) in einem Öffnungsbereich (8a) perforiert ist.

8. Bauteil nach einem der Ansprüche 4 bis 7, wobei der Grundkörper (2) in einem beide Halbkörper (2a, 2b) übergreifenden Öffnungsbereich (8a) perforiert ist.

9. Bauteil nach Anspruch 8, wobei bei einer die Halbkörper (2a, 2b) übergreifenden Perforierung im Öffnungsbereich (8a) dieser mit einem Verstärkungselement (10) versehen ist.

10. Bauteil nach Anspruch 9, wobei das Verstärkungselement (10) parallel zur Trennebene der Halbkörper (2a, 2b) angeordnet ist.

11. Bauteil nach einem der Ansprüche 1 bis 10, wobei der Grundkörper (2) mit mehreren in Längsrichtung gesehen in Abstand zueinander angeordneten Öffnungsbereichen (8a bis 8f) versehen ist.

12. Bauteil nach einem der Ansprüche 1 bis 11, wobei der Kanal (6) als Mehrkammerkanal ausgebildet ist.

13. Bauteil nach einem der Ansprüche 1 bis 12, wobei an den aneinander liegenden Rändern (R) der Halbkörper (2a, 2b) und/oder an dem Grundkörper (2) Halterungen, Anbindungspunkte oder Gehäuseteile (12) einer Heizungs- und/ oder Klimaanlage angeformt sind.

14. Verwendung eines Bauteils nach einem der Ansprüche 1 bis 13 als Instrumententafelträger in einem Kraftfahrzeug.

15. Verwendung eines Bauteils nach einem der Ansprüche 1 bis 13 als unter einer Windschutzscheibe angeordneter Querträger in einem Kraftfahrzeug, wobei der Kanal (6) ein Luftführungskanal zur Führung eines der Windschutzscheibe und/oder den Seitenscheiben zuzuführenden Luftstroms und/oder zur Beheizung einer Wischblattablage ist.

16. Verfahren zur Herstellung eines Bauteils nach einem der Ansprüche 1 bis 13, wobei der Grundkörper (2) im Bereich zumindest eines Öffnungsbereichs (8a) zumindest teilweise perforiert, in eine Grundform umgeformt und in ein Werkzeug eingelegt wird, in welchem der Kunststoffkern (4) in einem einzigen Verfahrensschritt an den Grundkörper (2) angeformt, z.B. angespritzt wird, wobei der Kunststoffkern (4) in einem Öffnungsbereich (8a) zumindest teilweise perforiert ausgebildet wird.

## Claims

1. A structural element (1), formed as a cross member for arranging between A-pillars of a motor vehicle, wherein the cross member is provided as an air conducting duct, with a basic body (2) which is essentially designed as a hollow profile, which is provided on the inside with a plastic core (4) forming at least one duct (6), **characterised in that** the basic body (2) and the plastic core (4) are formed perforated in at least the region of an opening region (8a).

2. The structural element as claimed in claim 1, wherein the basic body (2) is formed from sheet metal, in particular from steel sheet or light sheet metal.

3. The structural element as claimed in claim 1 or 2, wherein the perforation of the basic body (2) is formed from perforated sheet metal and/or a wire mesh and/or an expanded metal.

4. The structural element as claimed in one of claims 1 to 3, wherein the basic body (2) is formed from two half bodies (2a, 2b), in particular from two half shells.

5. The structural element as claimed in one of claims 1 to 4, wherein the basic body (2), in particular its two half bodies (2a, 2b), are held together via the plastic core (4).

6. The structural element as claimed in claim 4 or 5, wherein the two half bodies (2a, 2b) are additionally connected mechanically.

7. The structural element as claimed in one of claims 4 to 6, wherein the basic body (2) is perforated in one opening region (8a) per half body (2a, 2b).

8. The structural element as claimed in one of claims 4 to 7, wherein the basic body (2) is perforated in an opening region (8a) engaging over both half bodies (2a, 2b).

9. The structural element as claimed in claim 8, wherein the opening region (8a), in the case of it being provided with a perforation engaging over the half bodies (2a, 2b), is provided with a reinforcing element (10).

10. The structural element as claimed in claim 9, wherein the reinforcing element (10) is arranged parallel to the plane of separation of the half bodies (2a, 2b).

11. The structural element as claimed in one of claims 1 to 10, wherein the basic body (2) is provided with a plurality of opening regions (8a to 8f) which are arranged at a distance from one another, as seen in the longitudinal direction.

12. The structural element as claimed in one of claims 1 to 11, wherein the duct (6) is designed as a multichamber duct.

13. The structural element as claimed in one of claims 1 to 12, wherein securing means, connecting points or housing parts (12) of a heating and/or air-conditioning system are integrally formed on the edges (R), which bear against each other, of the half bodies (2a, 2b) and/or on the basic body (2).

14. Use of a structural element as claimed in one of claims 1 to 13 as an instrument panel support in a motor vehicle.

15. The use of a structural element as claimed in one of claims 1 to 13 as a cross member, which is arranged below a windshield, in a motor vehicle, wherein the duct (6) is an air conduction duct for conducting an air flow to be supplied to the windshield and/or the side windows, and/or for heating a wiper blade support.

16. A method for producing a structural element as claimed in one of claims 1 to 13, wherein the basic body (2) is at least partially perforated in the region of an opening region (8a), is formed into a basic shape and is placed into a die in which the plastic core (4) is integrally formed on the basic body (2), for example is injection-molded on, in a single method step, wherein the plastic core (4) is formed at least partially perforated in an opening region (8a).

## Revendications

1. Pièce de structure (1) configurée comme une traverse à disposer entre des montants A d'un véhicule automobile, où la traverse est prévue comme un conduit de guidage d'air, comprenant un corps de base (2) configuré sensiblement comme un profilé creux, corps de base qui est doté, à l'intérieur, d'une partie centrale en matière plastique (4) formant au moins un conduit (6), **caractérisée en ce que** le corps de base (2) et la partie centrale en matière plastique (4) sont configurés en étant perforés dans la zone d'au moins une zone d'ouverture (8a).

2. Pièce de structure selon la revendication 1, où le corps de base (2) est formé par une tôle, en particulier par une tôle d'acier ou de métal léger.

3. Pièce de structure selon l'une ou l'autre des revendications 1 et 2, où la perforation du corps de base (2) est réalisée à partir d'une tôle perforée et / ou d'une toile métallique et / ou d'un métal étiré.

4. Pièce de structure selon l'une quelconque des revendications 1 à 3, où le corps de base (2) est formé par deux demi-corps (2a, 2b), en particulier par deux demi-coques.

5. Pièce de structure selon l'une quelconque des revendications 1 à 4, où le corps de base (2), en particulier ses deux demi-corps (2a, 2b), est maintenu solidaire par la partie centrale en matière plastique (4).

6. Pièce de structure selon la revendication 4 ou 5, où les deux demi-corps (2a, 2b) sont assemblés en outre mécaniquement.

7. Pièce de structure selon l'une quelconque des revendications 4 à 6, où le corps de base (2) est perforé dans une zone d'ouverture (8a), pour chaque demi-corps (2a, 2b).

8. Pièce de structure selon l'une quelconque des revendications 4 à 7, où le corps de base (2) est perforé dans une zone d'ouverture (8a) recouvrant les deux demi-corps (2a, 2b).

9. Pièce de structure selon la revendication 8, où, dans le cas d'une perforation recouvrant les demi-corps (2a, 2b) dans la zone d'ouverture (8a), celle-ci est dotée d'un élément de renfort (10).

10. Pièce de structure selon la revendication 9, où l'élément de renfort (10) est disposé de façon parallèle au plan de séparation des demi-corps (2a, 2b).

11. Pièce de structure selon l'une quelconque des revendications 1 à 10, où le corps de base (2) est doté de plusieurs zones d'ouverture (8a à 8f) disposées en étant espacées les unes des autres, en regardant dans le sens longitudinal.

12. Pièce de structure selon l'une quelconque des revendications 1 à 11, où le conduit (6) est configuré comme un conduit à chambres multiples.

13. Pièce de structure selon l'une quelconque des revendications 1 à 12, où des fixations, des points d'attache ou des parties de carter (12) d'un système de chauffage et / ou de climatisation sont formés sur des bords (R) des demi-corps (2a, 2b), en appui l'un contre l'autre, et / ou sur le corps de base (2).

14. Utilisation d'une pièce de structure selon l'une quelconque des revendications 1 à 13, comme support de tableau de bord dans un véhicule automobile.

15. Utilisation d'une pièce de structure selon l'une quelconque des revendications 1 à 13, comme traverse dans un véhicule automobile, disposée au-dessous d'un pare-brise, où le conduit (6) est un conduit de guidage d'air pour le guidage d'un flux d'air à fournir au pare-brise et / ou aux vitres latérales, et / ou pour le chauffage de la partie logement des essuie-glaces.

16. Procédé de fabrication d'une pièce de structure selon l'une quelconque des revendications 1 à 13, où le corps de base (2) est au moins partiellement perforé dans la zone d'au moins une zone d'ouverture (8a), transformé en une forme de base et introduit dans un outil dans lequel la partie centrale en matière plastique (4) est formée, par exemple moulée par injection, sur le corps de base (2), au cours d'une seule étape de procédé, où la partie centrale en matière plastique (4) est configurée en étant au moins partiellement perforée dans une zone d'ouverture (8a).
